# EUROPEAN PATENT SPECIFICATION

(11) **EP 2 694 445 B1**
(45) Date of publication and mention of the grant of the patent: **20.07.2016**
(21) Application number: 12719252.4
(22) Date of filing: 03.04.2012
(51) Int. Cl.: C02F 9/00, C02F 1/02, C02F 1/28, C02F 1/32, C02F 1/44, C02F 1/68, C02F 1/76

(54) **MOBILE WATER PURIFICATION SYSTEM**
MOBILES WASSERREINIGUNGSSYSTEM
SYSTÈME DE PURIFICATION D'EAU MOBILE

(30) Priority: 04.04.2011 DK 201170159 P; 20.04.2011 US 201161477234 P
(43) Date of publication of application: 12.02.2014
(73) Proprietor: Pure H2o A/S, 4000 Roskilde (DK)
(72) Inventor: ELLEGAARD, Jesper, DK-4000 Roskilde (DK)
(74) Representative: Høiberg A/S
(86) International application number: PCT/DK2012/050107
(87) International publication number: WO 2012/136220

(56) References cited:
- WO-A1-2007/010549
- US-A1- 2006 219 613

## Description

The present invention relates to a mobile water purification system employing crossflow filtration, such as reverse osmosis filtration. The present water purification system is adapted to be deployed in remote areas substantially anywhere in the world.

### Background of invention

Water treatment systems using reverse osmosis filtration are standard primary water treatments of choice because of their capability to reduce dissolved salts, suspended matter and microorganisms by more than 99.5 percent. Reverse osmosis filters known in the art consist of a semi-permeable membrane within a pressure vessel that allows some water to pass through the membrane when the water pressure is at a controlled point. The water that has passed through the membrane is purified. Water purification systems known in the art are discussed in WO 2009/127034, US 2006/0219613 and US 2009/250407.

### Summary of invention

A problem with known mobile water purification systems that are to be deployed in remote areas and in disaster relief situations is that the output (in liters/hour) of purified water is quite small compared to the typical requirements in a disaster area. Thus, one object of the invention is to increase the output of clean water. When designing an optimal mobile water purification system it is a balance between high output, portability, energy consumption and purity of the treated water. A further object of the invention is therefore to provide an increased flexibility of the system.

This is achieved by a mobile water purification system as specified in claim 1.

The water purification system according to the present invention is designed to supply a high output of purified water and sustain local climate conditions in remote areas all around the globe. In crossflow filtration systems a limitation on the output of purified water is partly determined by the maximum pressure that can be delivered by the pump unit. And in order for a water purification system to be mobile and to enable operation in e.g. remote areas there is typically a limit to the size, weight and energy consumption of the pump. With these predetermined limits on the configuration of the pump, the water output capacity is therefore limited by the type and configuration of the membrane filters.

The mobile water purification system according to the present invention has been demonstrated in an exemplary embodiment to supply an unprecedented output of more than 4000 litres/hour of purified water (with a raw water salinity of max . 0.5% using water from e.g. a lake, river, borehole, with a max. salt content of 0.5% or 500 ppm), using reverse osmosis filters. This is exceptional for a compact and mobile water purification system. The high output of this exemplary embodiment is due to an advantageous combination and adaptation of the individual components and due to the arrangement of the reverse osmosis (R/O or rO) filters. By increasing the size and/or number of R/O membranes in the crossflow filtration unit and with small modifications to the rest of the components, the mobile water purification system according to the present invention may provide more than 10.000 litres/hour of purified water.

The membrane filters (R/O filters) arranged in sequence to guarantee a superior purification of the water whereas the sequences of R/O filters arranged in parallel ensures a high output. The R/O filters are preferably fed through one or more manifolds in the piping system.

The reconfigurable piping system provides for some flexibility of the water purification system in terms of usability. The piping system may be easily reconfigured such that the crossflow filtration unit is bypassed. I.e. the water enters though the water inlet and goes through the pre-filtration unit, the disinfection unit and out through the outlet. This configuration may be useful in a situation where the water from a water supply, e.g. a storage container with water, is substantially clean. E.g. the water may have been cleaned but the water supply may be known to contain bacteria or the storage container may be suspected of contaminating the water. Or the water may have been cleaned some time ago and now the water quality is questionable (typically due to a risk of presence of microorganisms). Or chlorine may have been added to the water to kill microorganisms. The water purification system according to the present invention may then be configured such that the suspicious water is pumped through the pre-filtration unit and the disinfection unit only thereby going through a thorough filtration, de-chlorination and disinfection process, however avoiding the crossflow filtration stage that is time and energy consuming and costs a substantial amount of water, compared to sediment filtration.

In a further embodiment of the invention also the de-chlorination stage may be bypassed. The de-chlorination may be provided to protect the crossflow filtration unit. However, if the crossflow filtration unit is bypassed there may be no need to provide de-chlorination.

Thus, the present mobile water purification system provides for an advantageous and flexible triple-use:
1. Water purification with pre-filtration, crossflow filtration and disinfection.
2. Water filtration and de-chlorination using pre-filtration - including de-chlorination - and disinfection,
3. Water filtration using pre-filtration, excluding de-chlorination, and disinfection.

### Crossflow filtration

Crossflow filtration is based on passing a feed across a filtration membrane and is also known as tangential flow filtration. Crossflow filtration is different from dead-end filtration in which the feed is passed through a membrane or bed, the solids being trapped in the filter and the filtrate being released at the other end. Cross-flow filtration gets its name because the majority of the feed flow travels tangentially across the surface of the filter, rather than into the filter. The principal advantage of this is that the filter cake (which can blind the filter) is substantially washed away during the filtration process, increasing the length of time that a filter unit can be operational. In crossflow filtration, the feed is passed across the filter membrane (tangentially) at positive pressure relative to the permeate side. A proportion of the material which is smaller than the membrane pore size passes through the membrane as permeate or filtrate; everything else is retained on the feed side of the membrane as retentate. With crossflow filtration the tangential motion of the bulk of the fluid across the membrane causes trapped particles on the filter surface to be rubbed off. This means that a crossflow filter can operate continuously at relatively high solids loads without blinding. Filtration membranes can be polymeric or ceramic, depending upon the application. The principles of cross-flow filtration are used in reverse osmosis, nanofiltration, ultrafiltration and microfiltration. Thus, crossflow filtration mentioned herein may be reverse osmosis filtration, nanofiltration, ultrafiltration or microfiltration and the membrane filters mentioned herein may be reverse osmosis filters, nanofiltration filters, ultrafiltration filters or microfiltration filters.

### Detailed description of the invention

In the preferred embodiment of the invention the dechlorination means comprises activated carbon filtration. Thus, one or more stages of active carbon filtration may be provided to remove chlorine from the water. Chlorine is known to damage crossfiltration membranes, in particular R/O membranes, so de-chlorination increases the lifespan of the membrane filters.

Further, the sediment filtrations means may comprise one or more cartridge filters, such as sequential cartridge filters of varying pore size. Each cartridge filter may comprise a plurality of cartridges to increase the capacity of the cartridge filter. The sediment filtrations means may comprise one or more cartridge filters with a rating of between 100 and 50 micron, such as between 50 and 40 micron, such as between 40 and 30 micron, such as between 30 and 25 micron, such as between 25 and 20 micron, such as between 20 and 15 micron, such as between 15 and 10 micron, such as between 10 and 5 micron, such as between 5 and 1 micron. E.g. a 25 micron cartridge filter followed by 5 micron cartridge filter.

The pre-filtration means may be protected by providing a coarse sediment filtration means prior to the pre-filtration unit. The coarse sediment filtration means may comprise one or more filters with a rating of between 1000 and 500 micron, 500 and 300 micron, 300 and 200 micron, 200 and 100 micron, 100 and 50 micron. E.g. the coarse sediment filtration means may comprise a 100 micron filter. A coarse sediment filtration may be in the form of a floating filter at the inlet. E.g. the inlet may be a tube extending into a water reservoir, such as a lake, and a floating filter may help to ensure that only coarsely filtrated surface water enters the pre-filtration unit. The floating filter may have a rating of between 1000 and 500 micron, 500 and 300 micron, 300 and 200 micron, 200 and 100 micron, 100 and 50 micron. E.g. the floating filter may be a 100 micron filter.

The preferred embodiment of the invention comprises an outlet for wastewater from the crossflow filtration unit, i.e. the water that does not pass through the membrane of the filter, i.e. this wastewater is not purified.

In one embodiment of the invention the crossflow filtration unit comprises at least two, more preferably at least three stages of membrane filters, i.e. sequentially arranged membrane filters. I.e. the purified water passes through at least two (double-pass) or at least three R/O filters (triple-pass). Further, the crossflow filtration unit may comprise at least two, more preferably at least three, even more preferably at least four lines of sequentially arranged membrane filters. In the preferred embodiment of the invention the crossflow filtration unit comprises a manifold for distributing water to the membrane filters arranged in parallel. E.g. a reverse osmosis filtration unit may accommodate twelve reverse osmosis filters arranged in four parallel lines with three sequential filtration steps.

In the preferred embodiment of the invention the disinfection unit comprises an UV sterilizer, i.e. the purified water exiting the crossflow filtration unit is decontaminated / disinfected by leading it trough an arrangement wherein one or more UV light sources (e.g. with a wavelength of 254 nm) shines onto the water, thereby killing microorganisms, e.g. bacteria, by destroying the DNA of the microorganisms. Another way of providing disinfection is by adding chlorine to the water, thus in one embodiment of the invention the disinfection unit comprises means for chlorination or chloramination of the water.

A problem with crossflow filtration is that the purification is so effective that possibly healthy content of e.g. minerals and vitamins are also removed. Thus, a further embodiment of the invention comprises an additive dispensing unit connectable via the piping system for supplying additives to the purified water. The additives may e.g. be dispensed to the purified water in a predefined dosage. The additives may be selected from the group of minerals, iodide, chlorine, vitamins, potassium, calcium, etc. In a further embodiment the he piping system is reconfigurable such that water can be fed through the additive dispensing unit only.

An important aspect of supplying pure water, possibly in disaster relief situation, is that the end users of the water can be sure that the water is actually clean. In a water purification system the water must be guided the correct way through the system. Thus, in a preferred embodiment of the invention at least a part of the reconfigurable piping system is provided with non-matching pipes / connectors. Thereby the risk of erroneous and faulty pipe connections is reduced. Preferably the piping system can only be connected in the water purification system in a unique and distinctive way, i.e. in one and only one way.

During use of a water purification system the different components and filters may become clogged and dirty. The cartridges of cartridge filters and filtration units of active carbon filters are preferably easily replaceable and/or washable. However, the membrane filters of a crossflow filtration unit are typically not easily replaceable or washable. As some of the water passes through the membrane of a membrane filter, the suspended matter, microorganisms, and dissolved solids in the remaining water increase. Some may settle or precipitate on the surface of the membrane, forming a deposit that can reduce the flow and the rated performance of the membrane filter. During the off cycles when the intake of water is shut off, the concentrated material that has deposited during the operating cycles can solidify and thereby form a scale. The operating flow (flux) through a module may thus gradually decrease. To restore the operating flow, the module must typically be chemically cleaned, e.g. with combinations of approved alkali and then by acid solutions and rinsed until the rated performance is restored. When microorganisms form colonies within the modules and contaminate the purified water, the modules must be cleaned and then sanitized with an agent approved by the module manufacturer.

Cleaning and sanitizing membrane filter modules requires shutting down the water purifying process for several hours or days, which adversely impacts on those who require purified water for their activities, because the downtime is considerable.

Therefore, the procedure is often postponed for convenience, thus causing the contamination problems to increase and the performance standard to decrease beyond membrane manufacturers' recommendations. But frequent cleaning and sanitizing is required in order to comply with standard specifications. In a preferred embodiment of the invention the reverse osmosis filtration unit is therefore adapted to be easily replaceable. Thus, if the output of purified water is reduced to an unacceptable level the crossflow filtration unit may be replaced, e.g. replaced by another (new / clean) crossflow filtration unit. The replacement is preferably provided by a reconfiguration of the piping system. The dirty crossflow filtration unit can then be cleaned while the replacement crossflow filtration unit ensures that the downtime of the system is minimized.

The water purification system according to the invention is preferably containerized, i.e. arranged in standard intermodal containers or arranged in container(s) / housing that are adapted to match (e.g. by stacking) into standard intermodal containers, e.g. by selecting appropriate width, length and height of the housing. And preferably the housing / compartments may be provided with grooves at the bottom to directly match a forklift. If the reverse osmosis filtration unit is for example mounted in a separate compartment it may be easily replaceable. Thus, with the crossflow filtration unit mounted in a separate compartment the downtime of the water purification system according to the invention is minimized. The piping system preferably provides the fluid communication between the crossflow filtration unit in the separate compartment and the rest of the water purification system. Thus, in one embodiment of the invention the housing comprises a first compartment for the pump unit, the pre-filtration unit and the disinfection unit and a second compartment for the crossflow filtration unit.

As the crossflow filtration unit can be bypassed the first compartment can thereby function as a complete water treatment system with water filtration and disinfection. By using cartridge filters with a filter range around 1 micron, activated carbon filters to catch organic elements, chlorine and other halogens and a disinfection unit to kill microorganisms a very efficient water filtration may be provided by the these elements in the first compartment. If complete water purification is needed the crossflow filtration unit in the second compartment may be connected. Thus, the present mobile water purification system provides an unseen degree of flexibility and output capacity.

The outer volume of the housing, the first and/or the second compartment is important for the mobility of the water purification system. In one embodiment of the invention the housing, the first and/or the second compartment has an outer volume of less than 5 m³, more preferably less than 4 m³, more preferably less than 3 m³, more preferably less than 2 m³, more preferably less than 1.8 m³, more preferably less than 1.7 m³, more preferably less than 1.6 m³, more preferably less than 1.55 m³, more preferably less than 1.52 m³, more preferably less than 1.5 m³, more preferably less than 1.2 m³, more preferably less than 1 m³.

The housing, the first and/or the second compartment may preferably have an outer dimension of less than 2.5 m x 2.5 m x 3.1 m (length x width x height), more preferably less than 2 m x 2 m x 2 m, more preferably less than 1.5 m x 1.5 m x 1.5 m, more preferably less than 1.3 m x 1.3 m x 1.3 m, more preferably less than 1.2 m x 1.2 m x 1.2 m, more preferably less than 1.16 m x 1.16 m x 1.14 m, more preferably less than 1.1 m x 1.1 m x 1.1 m, more preferably less than 1 m x 1 m x 1 m.

A further advantage of the crossflow filtration unit placed in a separate compartment is that the maximum total output of purified water may be selected in a more flexible way. As previously mentioned the limitation on the output in a mobile water purification system is mostly due to the crossflow filtration unit, because the size, weight and energy consumption of the pump unit limits the available pressure that can be provided by the pump unit. Thus, by scaling the crossflow filtration unit the total output of purified water can be scaled correspondingly. The pre-filtration, piping, pump and disinfection component may thus be adapted to cooperate with different sizes / configurations of crossflow filtration units provided in a separate compartment, whereby the water purification system according to the invention may be supplied with different maximum total output depending on the available output of the crossflow filtration unit.

In one embodiment of the invention the total output capacity of purified water from the water purification system is at least 2000 litreslitres/hour, such as at least 3000 litres/hour, such as at least 4000 litres/hour, such as at least 5000 litres/hour, such as at least 6000 litres/hour, such as at least 7000 litres/hour, such as at least 8000 litres/hour, such as at least 9000 litres/hour, such as at least 10000 litres/hour, such as at least 12000 litres/hour, such as at least 15000 litres/hour, such as at least 20000 litres/hour, such as at least 30000 litres/hour, with a salinity of the water of up to 0.5% and a temperature of the water of approx. 25°C.

The water purification system according to the present invention is preferably adapted to be employed globally and thereby adapt to local climate conditions. Temperatures below zero degrees Celsius may often be encountered. Thus, a preferred embodiment of the invention comprises an anti-freezing unit for frost protection of the system. The anti-freezing unit is preferably mounted in the housing, i.e. permanently available. The anti-freezing unit may comprise a container for storing anti-freeze liquid such as glycol or ethanol. Further, the anti-freezing unit may accommodate a pump for providing anti-freeze liquid to the system. This pump may be manually operated. Thus, components of the water purification system may be freeze protected by filling the system with an anti-freeze liquid thereby protecting the filters and the piping system from frost bursts. Before use the system is then flushed with water for some minutes to extract the anti-freeze liquid.

In a preferred embodiment of the invention the housing is adapted to suppress EMC noise generated by the system. EMC noise may be suppressed by enclosing electronic equipment, like the distribution board, in one or more Faraday cages, such as one or more steel boxes and by employing specially adapted shielded electrical wires to connect the different electrical components. This may be a great advantage if the water purification system according to the invention is applied in military use. By suppressing EMC noise the system is substantially "invisible" to hostile EMC scanners.

In a further embodiment of the invention the housing comprises drainage, which is particular useful if the housing is flooded. Further, the housing may comprise an inlet for supply of air, such as dry air, e.g. to decrease the humidity of the housing.

The efficiency of a membrane filter, i.e. the ratio between purified water and drainage water from a membrane filter is determined by the pressure and the temperature of the water. The efficiency is typically increasing with increasing temperature. For a R/O filter the efficiency reaches a maximum at approx. 25°C without increasing further with the temperature. As the present invention may be deployed in remote areas the temperature of the water is often significantly below 25°C. Thus, a further embodiment of the invention comprises means for heating the water prior to entering the crossflow filtration unit. The maximum output of purified water may thereby be increased, e.g. if the water is heated to approx. 25°C. The water may be heated by means of an immersion heater. Further, the water may be heated by means of a solar air heater, e.g. the water is passed though a solar air heater prior to entering the pre-filtration unit. A solar air heater may for instance be integrated in the top cover of the housing.

In a further embodiment of the invention one or more solar cell panels may be provided for supplying power to the present water purification system, in particular to the pump unit. A battery pack may be provided for supplying power to the present water purification system. One or more solar cell panels may further be provided to supply power to the battery pack.

### Description of Drawings

The present invention will now be described in further details with reference to the drawings in which
- Fig. 1: shows the deployment of a mobile water purification system,
- Fig. 2: is an illustration of the structure of a water purification system,
- Fig. 3: shows an example of a water purification system according to one embodiment of the invention,
- Figs. 4-6: provide a more detailed look at the water purification system in fig. 3,
- Fig. 7: shows a floating filter,
- Fig. 8: shows a frost protection unit,
- Fig. 9: shows different component of a pre-filtration unit,
- Fig. 10: shows an example of a disinfection unit
- Fig. 11: shows a pump unit, and
- Fig. 12: shows various counters and manometers located in a water purification system.

### Detailed description of the invention

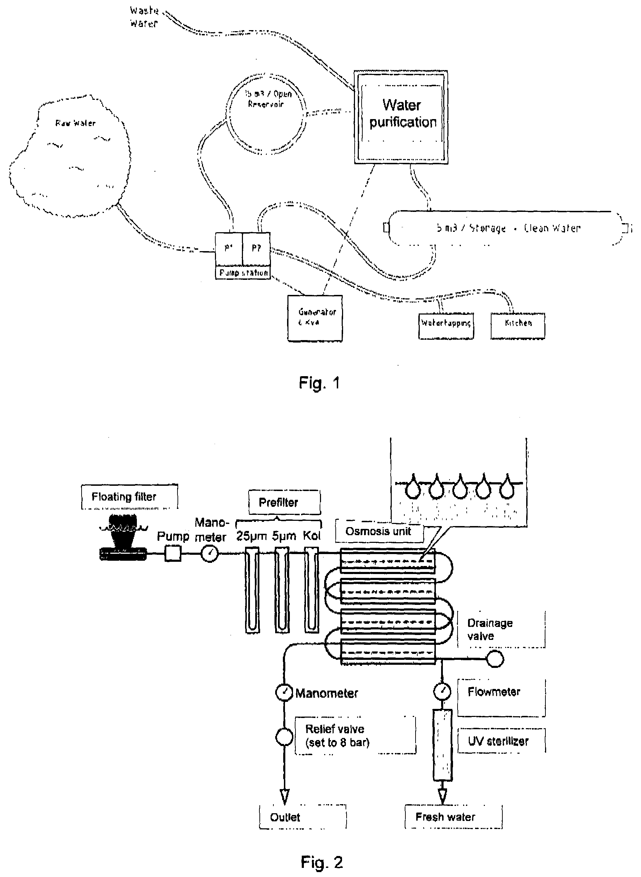

Fig. 1 shows an example of how to deploy a mobile water purification system. Raw water is provided from a lake and fed to a reservoir by means of an external pump station driven by a generator. The water to the water purification system is provided from this reservoir. After purification the purified water is sent to another storage. Thus, the integrated pump unit of the water purification system may be supplied by external pump systems.

Fig. 2 shows the structure of a reverse osmosis water purification system.

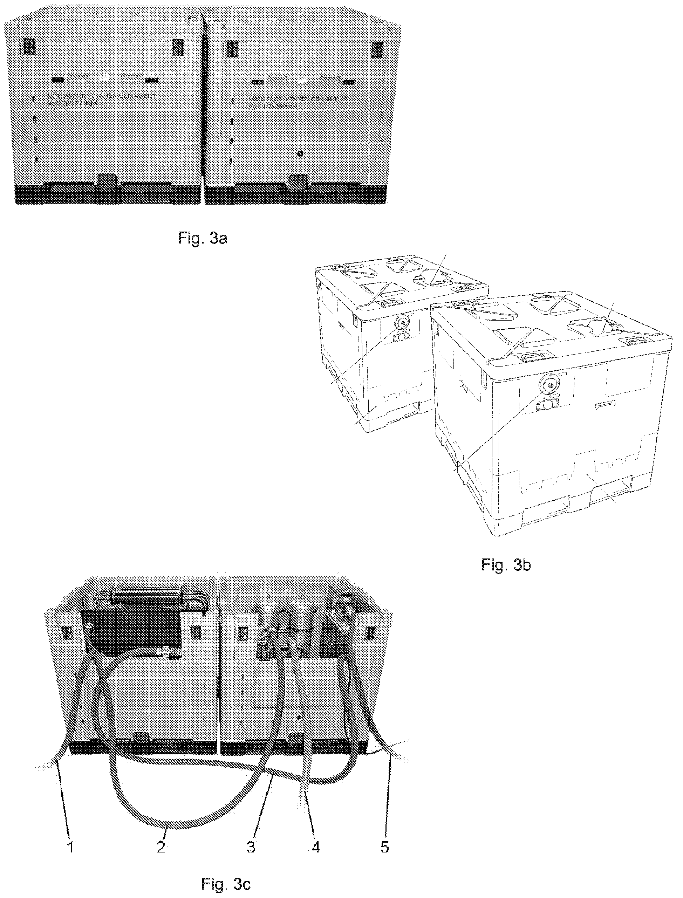

Fig. 3a shows a picture of an example of a mobile water purification system according to the invention. The housing of the system comprises two compartments with the crossflow filtration unit placed in one compartment (the left compartment in the figure). In this example the crossflow filtration is reverse osmosis filtration. Fig. 3b shows a perspective illustration of two compartments. Fig. 3c show the system in fig. 3a where the lid and the upper part of the front cover has been removed thereby exposing part of the reconfigurable piping system. As seen from fig. 3 the compartments are provided with holes at the bottom for directly matching a forklift. Each of the compartments has an outer dimension of 1155 x 1155 x 1132 mm corresponding to an outer volume of 1.51 m³. Thus, twenty of these compartments may be stacked into a standard 20 ft intermodal container. With a total output capacity of more than 4000 litres/hour of purified water this is indeed a very compact water purification system. As the pump unit in this exemplary embodiment requires 4 kW to be driven at maximum power, each liter of purified water requires only approx. 0.001 KWH of energy to produce. The present mobile water purification system is therefore also very energy-efficient.

With reference to fig. 3c: Part of the piping system has been labelled with the drainage outlet 1, the tube 2 connecting the pre-filtration unit with the rO filtration unit, the tube 3 connecting the rO filtration unit with the disinfection unit, the tube 4 as the water inlet, and the tube 5 being the outlet of purified water. Thus, the tubes 2, 3 is the part of the piping system connecting the compartment to the right containing the pre-filtration unit, pump unit and disinfection unit and the compartment to the left containing the rO filtration unit. The rO filtration unit is thereby easily replaceable because it is just a matter of disconnecting and reconnecting the tubes 2, 3 when a new compartment containing a clean rO filtration unit is made use of. The different flexible tubes 1, 2, 3, 4, 5 of the piping system have been marked with different colours that match corresponding colours of the connecting portions in the housing. These colours are not visible in the figures. The colour coding is a way of preventing that the piping system is misconnected.

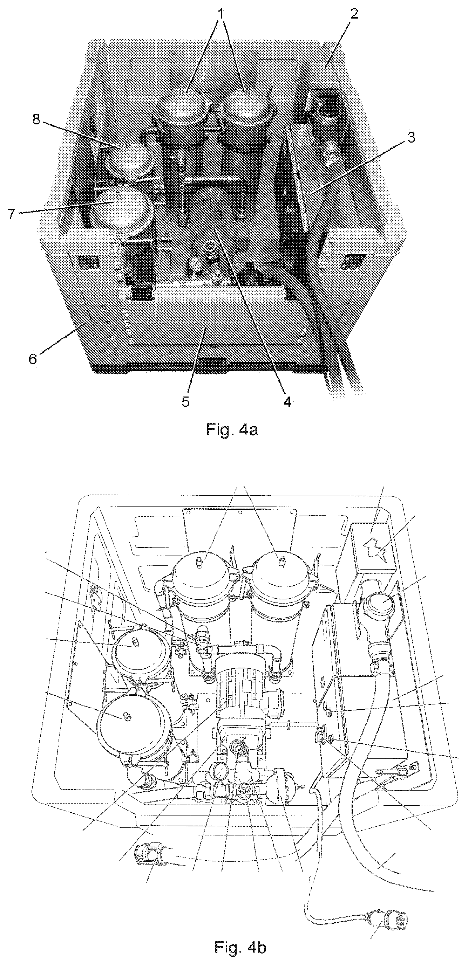

With reference to fig. 4: Fig. 4a shows a perspective picture of a compartment 6 (without the top cover) containing a pre-filtration unit accommodating a twenty-five micron sediment filter 7, a five micron sediment filter 8 and active carbon filters 1, a pump unit 4, a disinfection unit 2 and a distribution board 3 (control boxes). Part of the front plate 5 of the compartment 6 can be folded down to allow the flexible tubes entering and exiting the compartment when the top cover is mounted. The compartment in fig. 4a is illustrated in fig. 4b where the different components can be better distinguished.

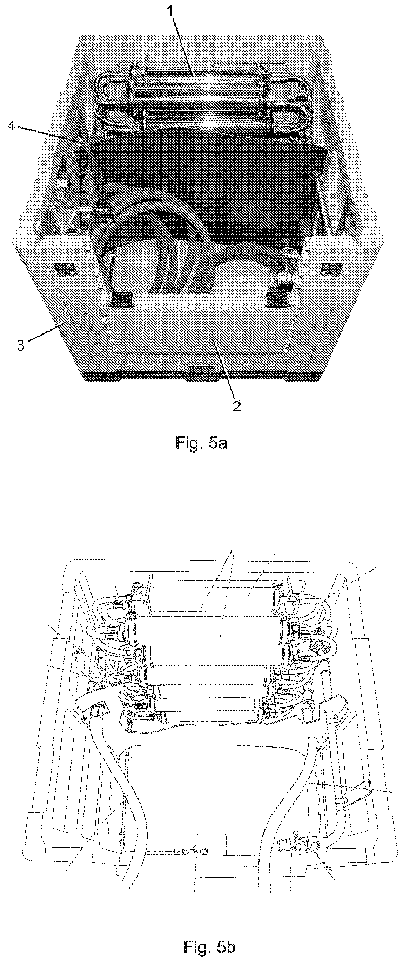

With reference to fig. 5: Fig. 5a shows a perspective picture of a compartment 3 (without the top cover) containing a rO filtration unit 1. Anti-frost protection is further installed in this compartment 3 which is manually operated via the handle 4. A compartment corresponding to the compartment shown in fig. 5a is illustrated in fig. 5b where the different components can be better distinguished and it can be seen that the rO filtration unit comprises twelve rO filters. The anti-frost protection is not shown in fig. 5b. Part of the front plate 2 of the compartment 3 can be folded down to allow the flexible tubes entering and exiting the compartment when the top cover is mounted. As seen from fig. 5 the rO filters only takes up approx. one fourth to one third of the cavity of the compartment 3. Thus, more rO filters or bigger rO filters may be accommodated in the compartment 3 thereby increasing the output capacity of the water purification system.

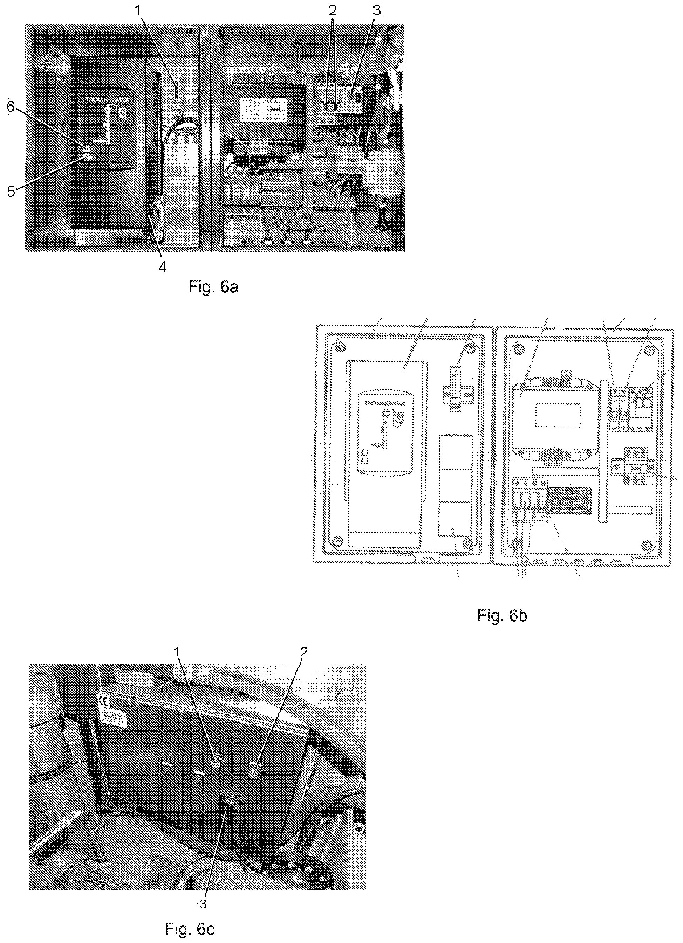

Fig. 6 show the distribution board / control boxes. The distribution board is located in a closed metal box to suppress EMC noise. This is best seen in fig. 6c. For the average user only two buttons are visible and necessary to run the water purification system: The "START" button 1 and the "STOP" button 2. A bull switch 3 is further provided as a safety precaution. This metal box that encloses all electronics and the configuration of the distribution board provide for a system which does radiate EMC noise. A picture of the distribution board is provided in fig. 6a along with an illustration in fig. 6b. The distribution board accommodates a counter 1 that adds up and displays the total time the system has been operating, fuses 2, electrical protection 3 for the pump unit, a fuse 4 for the UV light source in the disinfection unit, a reset button 5 for the UV light source when it has been replaced, and a reset button 6 for an alarm that goes off when the UV light source has been in operation for a year, and thereby ready for replacement.

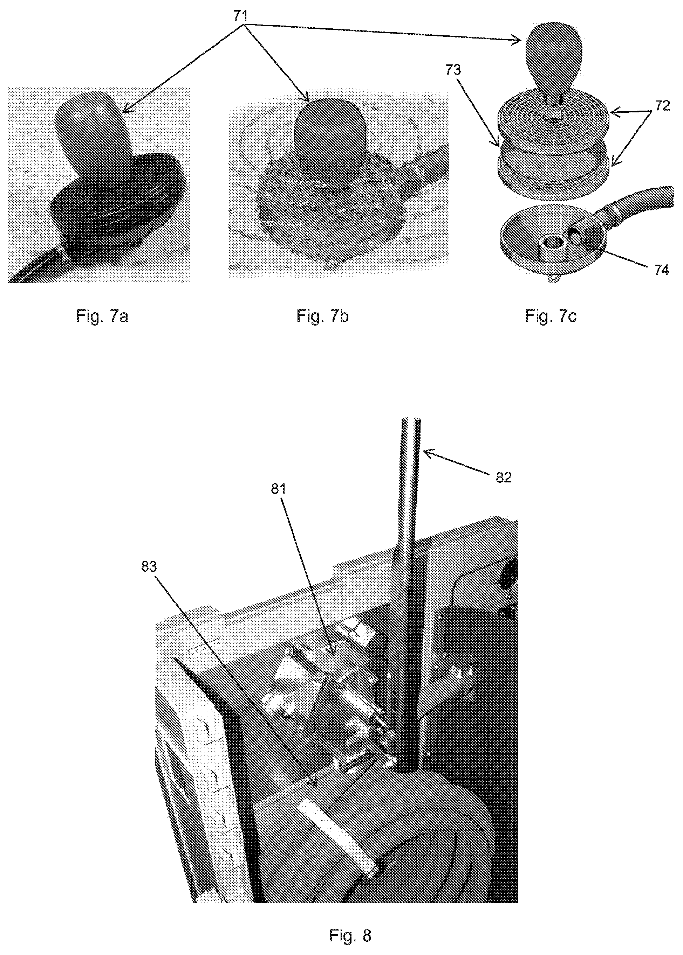

Fig. 7a shows a picture of a floating filter that also functions as coarse sediment filter providing 100 micron filtration prior to the pre-filtration unit. The floating filter is illustrated immersed in water in fig. 7b and disassembled in fig. 7b. The floating filter comprises a float 71 ensuring that surface water is provided to the inlet when the raw water is provided from e.g. a lake. Surface water is typically cleaner than water from the bottom. The water is sucked into the inlet tube opening 74 after having passed the coarse sediment filter 73 sandwiched between two "screens" 72. The floating filter can be easily disassembled, e.g. when the filter 73 is cleansed. The position of the floating filter in the water can be controlled by loading the float 71 with water, e.g. the top surface of the water reservoir may contain unwanted particles or contaminants. By loading some water into the float 71 the floating filter may be immersed an appropriate distance below the surface.

An anti-freezing unit is shown in fig. 8 comprising a pump unit 81 which is manually operated by means of the handle 82. A flexible tube 83 can be rolled out to be connected to a container of anti-freeze liquid like ethanol or glycol. The anti-freeze unit is in this case mounted in the compartment containing the rO filtration unit but may also be mounted in the other compartment. However, it makes sense to mount it near the rO filtration unit, because the rO filters are typically most vulnerable to frost damages. Sediment filters can typically be disassembled and dried, thereby virtually eliminating the risk of frost damages. The pump unit, disinfection unit and distribution board are also typically safe against frost damages. But the rO filters can typically not be disassembled. And a rO membrane will typically be damaged if dry for a longer period. Thus, it is essential to keep the rO membrane moist, however at the same time the rO membrane may be damaged by frost. By pumping an anti-freeze liquid through the rO filters the rO membrane may be kept moist and frost safe substantially anywhere on the globe. Frost protection of the rO filtration unit is typically provided by initially pumping air trough the rO filters by means of the pump unit 81 and the handle 82 to pump out any remains of water in the membranes. The sucking side of the pump unit 81 is subsequently connected to a container of anti-freeze liquid and the pressure side of the pump unit 82 is connected to the inlet of the rO filtration unit. By operating the handle the anti-freeze liquid is distributed in the rO filters and across the rO membranes. By connecting the drainage outlet from the rO filtration unit to the anti-freeze liquid container a closed loop may be provided such that the minimal amount of anti-freeze liquid is necessary.

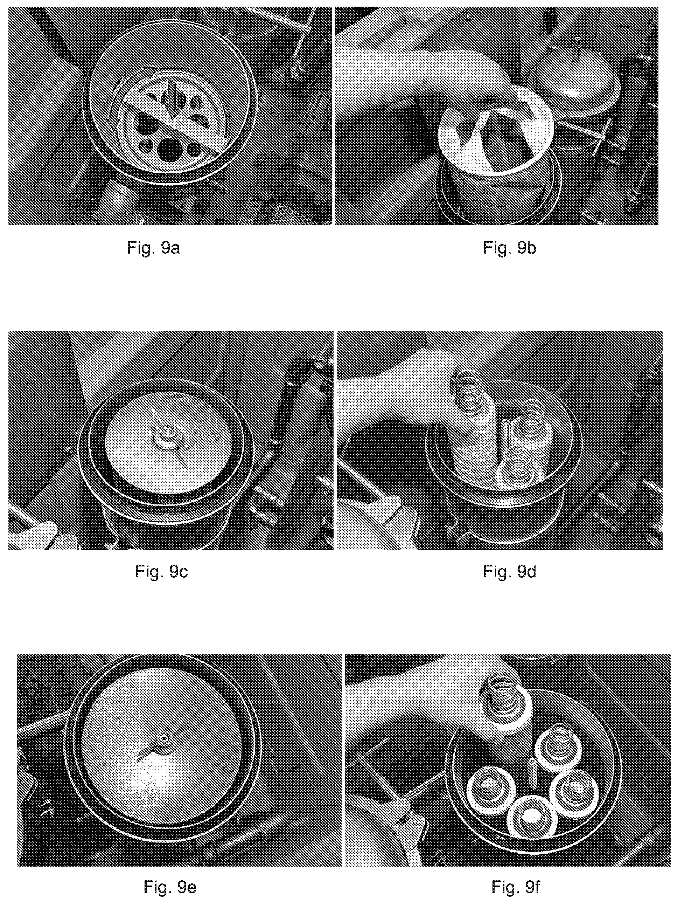

Fig. 9a shows a perspective view into a twenty-five micron cartridge filter. The cartridge is lifted out of the filter container in fig. 9b. Thus, this cartridge is easily replaceable. Furthermore, as this filter is merely a bag with a pore size of approx. twenty-five micron it is easily washable, e.g. in running water.

Fig. 9c shows the contents of a five micron cartridge filter. In fig. 9d it can be seen that the filter comprises three cartridge filters. By using a plurality of cartridges in each filter the capacity of the cartridge filter is increased. These cartridges are not washable and must be replaced. But as seen from fig. 9d they can be replaced by hand.

Fig. 9e shows the contents of an active carbon filter. In fig. 9f it can be seen that the filter comprises five active carbon cartridges. By having a plurality of cartridges the area of active carbon can be increased compared to having only a single cartridge. These filters are not washable and must be replaced. But as seen from fig. 9d they can be replaced by hand. Several active carbon filters may be arranged in series to ensure that the water is as clean as possible before entering the rO filtration unit, in particular to ensure that chlorine has been removed from the water. Active carbon cartridges may be expensive and may require often replacement or cleaning. As previously stated it may be possible to bypass the de-chlorination stage, e.g. if the crossflow filtration unit is bypassed. In this example the de-chlorination stage may be bypassed by removing the active carbon cartridges from the active carbon filters. The water then passes through the filter and the lifespan of the active carbon cartridges may be extended, because de-chlorination may not be necessary if the rO filters are bypassed.

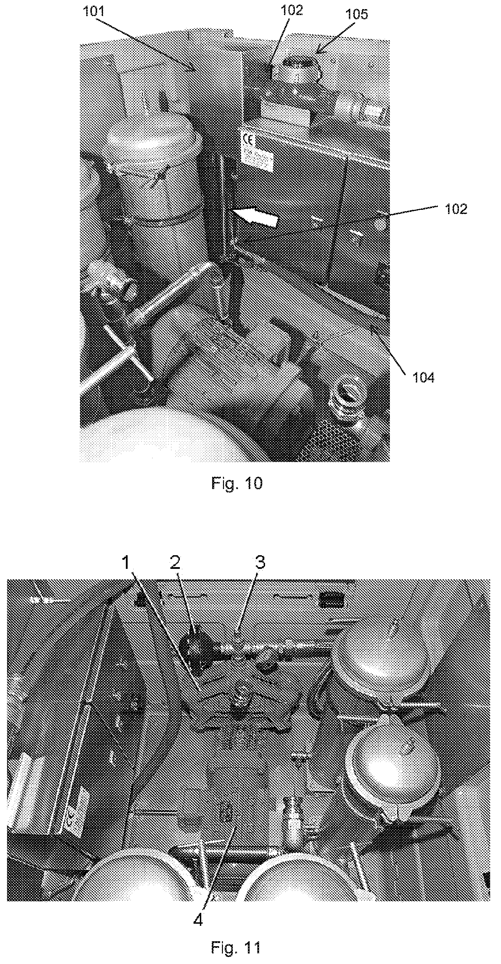

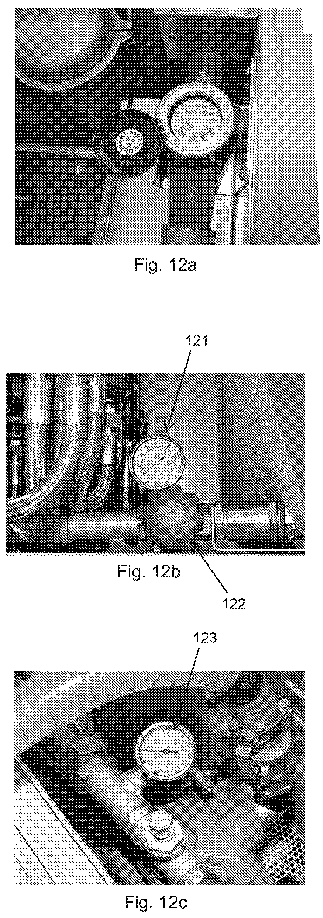

Fig. 10 shows the disinfection unit 101, in this example the disinfection is based on UV light. The water enters the disinfection unit 101 through the inlet 102 connected to a flexible tube 104 coming from the output of the rO filtration unit. Inside the box 101 the water passes through a transparent tube and an UV light source irradiates the water to kill microorganisms that against all odds has survived passing the rO filtration unit. The device 105 provides the total output of water that has passed the disinfection unit and also provides flow of water per time unit (see fig. 12a).

With reference to fig. 11: A pump unit is provided with an electric motor 4, a pump 1, a safety valve 3 to control the pressure in the system and air based pressure reducer 2. The safety valve 3 automatically opens to reduce pressure if the pressure increases above a threshold. In this example the threshold is 13 bars. This pump unit provides the necessary pressure to drive the water through the piping system and in particular across the rO membrane. Thus, the pump unit is configured to both suck and force water through the piping system and to provide the necessary pressure gradient across the crossflow membranes. The pump unit shown can provide a pressure of approx. 8-15 bars which suffers to purify water with a salinity of up to 0.5%.

Fig. 12a shows a close-up picture of the counter / flow-meter mounted after the disinfection unit. The counter shows the total output in m³ of water and the flow meter shows the current flow of water through the flow-meter when the system is in operation.

A pressure of at least eight bars must be established in the rO filters to force the water through the rO membranes. This is provided by the valve 122 shown in fig. 12b and mounted just after the rO filtration unit. Along with the valve 122 is a manometer 121 to display the pressure that is adjusted by the valve 122. A manometer 123 shown in fig. 12c is mounted after the pump unit to monitor the pressure in the piping system before the pre-filtration unit. The difference between the two manometers 121, 123 therefore provides the pressure reduction of the water passing the pre-filtration unit and the rO filtration unit. A difference of more than 4 bars typically indicates that the filters in the pre-filtration unit must be cleaned or replaced. A reduction in the output flux of purified water may be an indication that the rO filtration unit must be replaced. And with the current system the rO filtration unit is easily replaced because it is mounted in a separate compartment.

## Claims

1. A mobile water purification system comprising a housing, a pump unit and a piping system for providing fluid communication between a water inlet, a pre-filtration unit, a crossflow filtration unit configured for crossflow filtration, a disinfection unit and an outlet for supply of purified water, wherein
the pre-filtration unit comprises sediment / cartridge filtrations means and dechlorination means,
the crossflow filtration unit comprises a plurality of parallel and/or sequentially arranged membrane filters,
wherein the crossflow filtration unit is mounted in a separate compartment separate from the pump unit, the pre-filtration unit and the disinfection unit,
the piping system is reconfigurable such that the crossflow filtration unit in the separate compartment can be bypassed, and
at least a part of the reconfigurable piping system is provided with non-matching pipes and/or connectors such that the risk of erroneous and faulty pipe connections is reduced.

2. The system according to claim 1, wherein the dechlorination means comprises activated carbon filtration, and/or
wherein the crossflow filtration unit comprises reverse osmosis filters, nanofiltration filters, ultrafiltration filters and/or microfiltration filters, and/or
wherein the sediment filtrations means comprises one or more cartridge filters, said one or more cartridge filter preferably comprising a plurality of cartridges,
and/or wherein the disinfection unit comprises means for chlorination or chloramination.

3. The system according to any of the preceding claims, wherein the sediment filtrations means comprises cartridge filters of varying pore size / rating, and/or
wherein the sediment filtrations means comprises one or more cartridge filters with a rating of between 100 and 50 micron, such as between 50 and 40 micron, such as between 40 and 30 micron, such as between 30 and 25 micron, such as between 25 and 20 micron, such as between 20 and 15 micron, such as between 15 and 10 micron, such as between 10 and 5 micron, such as between 5 and 1 micron.

4. The system according to any of the preceding claims, further comprising a coarse sediment filtration means prior to the pre-filtration unit, the coarse sediment filtration means preferably comprising one or more filters with a rating of between 1000 and 500 micron, 500 and 300 micron, 300 and 200 micron, 200 and 100 micron, 100 and 50 micron.

5. The system according to any of the preceding claims, further comprising a floating filter at the inlet, the floating filter preferably having a rating of between 1000 and 500 micron, 500 and 300 micron, 300 and 200 micron, 200 and 100 micron, 100 and 50 micron.

6. The system according to any of the preceding claims, further comprising an additive dispensing unit connectable via the piping system for supplying additives to the purified water.

7. The system according to claim 6, wherein the additives are dispensed to the purified water in a predefined dosage, and/or wherein the additives are selected from the group of minerals, iodide, chlorine or vitamins, and/or
wherein the piping system is reconfigurable such that water can be fed through the additive dispensing unit only.

8. The system according to any of the preceding claims, wherein the housing comprises a first compartment for the pump unit, the pre-filtration unit, and the disinfection unit and a second compartment for the crossflow filtration unit.

9. The system according to any of the preceding claims, further comprising an anti-freezing unit for frost protection of the system, said anti-freezing unit preferably mounted in the housing.

10. The system according to claim 9, wherein the anti-freezing unit comprises a container for storing anti-freeze liquid such as glycol or ethanol, and/or
wherein the anti-freezing unit comprises a pump for providing anti-freeze liquid to the system.

11. The system according to any of the preceding claims, wherein the housing is adapted to suppress EMC noise generated by the system, and/or
wherein substantially all electrical components of the system are enclosed in Faraday cages, such as steel containers, and connected by shielded electrical wires.

12. The system according to any of the preceding claims, wherein the housing comprises an inlet for supply of air, such as dry air.

13. The system according to any of the preceding claims, further comprising means for heating the water prior to entering the crossflow filtration unit.

14. The system according to claim 13, wherein the water is heated by means of an immersion heater, and/or
wherein the water is heated by means of a solar air heater.

15. The system according to any of the preceding claims, further comprising one or more solar cell panels for supplying power to the system.

## Patentansprüche

1. Mobiles Wasseraufbereitungssystem, das ein Gehäuse, eine Pumpeneinheit und ein Rohrleitungssystem zur Bereitstellung einer Fluidverbindung zwischen einem Wassereinlass, einer Vorfiltrationseinheit, einer zur Crossflow-Filtration konfigurierten Crossflow-Filtrationseinheit, einer Desinfektionseinheit und einem Auslass zur Ausleitung des aufbereiteten Wassers umfasst, wobei
die Vorfiltrationseinheit Sediment- / Kerzenfiltrationsmittel und Entchlorungsmittel umfasst,
die Crossflow-Filtrationseinheit eine Vielzahl parallel und/oder aufeinander folgend angeordneter Membranfilter umfasst,
wobei die Crossflow-Filtrationseinheit in einer separaten Kammer eingebaut ist, die von der Pumpeneinheit, der Vorfiltrationseinheit und der Desinfektionseinheit abgetrennt ist,
das Rohrleitungssystem so rekonfigurierbar ist, dass die Crossflow-Filtrationseinheit in der separaten Kammer umgangen werden kann, und
mindestens ein Teil des rekonfigurierbaren Rohrleitungssystems mit nicht übereinstimmenden Rohrleitungen und/oder Anschlüssen versehen ist, sodass das Risiko fehlerhafter und falscher Rohrleitungsanschlüsse reduziert wird.

2. System nach Anspruch 1, wobei die Entchlorungsmittel eine Aktivkohlefiltration umfassen, und/oder
wobei die Crossflow-Filtrationseinheit Umkehrosmosefilter, Nanofiltrationsfilter, Ultrafiltrationsfilter und/oder Mikrofiltrationsfilter umfasst, und/oder
wobei die Sedimentfiltrationsmittel einen oder mehrere Kerzenfilter umfassen, wobei der eine oder die mehreren Kerzenfilter vorzugsweise eine Vielzahl von Kerzen umfasst/en,
und/oder wobei die Desinfektionseinheit Mittel zur Chlorierung oder Chloraminierung umfasst.

3. System nach einem der vorangegangenen Ansprüche, wobei die Sedimentfiltrationsmittel Kerzenfilter mit verschiedenen Porengrößen / Porenmaßen umfassen und/oder wobei die Sedimentfiltrationsmittel einen oder mehrere Kerzenfilter mit Maßen zwischen 100 und 50 Mikron, wie zum Beispiel zwischen 50 und 40 Mikron, wie zum Beispiel zwischen 40 und 30 Mikron, wie zum Beispiel zwischen 30 und 25 Mikron, wie zum Beispiel zwischen 25 und 20 Mikron, wie zum Beispiel zwischen 20 und 15 Mikron, wie zum Beispiel zwischen 15 und 10 Mikron, wie zum Beispiel zwischen 10 und 5 Mikron und wie zum Beispiel zwischen 5 und 1 Mikron umfassen.

4. System nach einem der vorangegangenen Ansprüche, das weiterhin Grobsedimentfiltrationsmittel vor der Vorfiltrationseinheit umfasst, wobei die Grobsedimentfiltrationsmittel vorzugsweise einen oder mehrere Filter mit Maßen zwischen 1.000 und 500 Mikron, 500 und 300 Mikron, 300 und 200 Mikron, 200 und 100 Mikron sowie 100 und 50 Mikron umfassen.

5. System nach einem der vorangegangenen Ansprüche, das weiterhin einen schwimmenden Filter am Einlass umfasst, wobei der schwimmende Filter vorzugsweise Maße zwischen 1.000 und 500 Mikron, 500 und 300 Mikron, 300 und 200 Mikron, 200 und 100 Mikron sowie 100 und 50 Mikron hat.

6. System nach einem der vorangegangenen Ansprüche, das weiterhin eine Additivdosiereinheit umfasst, die über das Rohrleitungssystem angeschlossen werden kann, um das aufbereitete Wasser mit Additiven zu versetzen.

7. System nach Anspruch 6, wobei die Additive in einer vordefinierten Dosis an das aufbereitete Wasser abgegeben werden und/oder wobei die Additive aus der Gruppe von Mineralien, Jodid, Chlor oder Vitaminen ausgewählt werden, und/oder
wobei das Rohrleistungssystem so rekonfigurierbar ist, dass das Wasser nur durch die Additivdosierungseinheit zugeführt werden kann.

8. System nach einem der vorangegangenen Ansprüche, wobei das Gehäuse eine erste Kammer für die Pumpeneinheit, die Vorfiltrationseinheit und die Desinfektionseinheit sowie eine zweite Kammer für die Crossflow-Filtrationseinheit umfasst.

9. System nach einem der vorangegangenen Ansprüche, das weiterhin eine Frostschutzeinheit zum Schutz des Systems vor Frost umfasst, wobei die Frostschutzeinheit vorzugsweise im Gehäuse eingebaut wird.

10. System nach Anspruch 9, wobei die Frostschutzeinheit einen Behälter zur Lagerung einer Frostschutzlösung wie zum Beispiel Glykol oder Ethanol umfasst und/oder wobei die Frostschutzeinheit eine Pumpe für die Zufuhr der Frostschutzlösung zum System umfasst.

11. System nach einem der vorangegangenen Ansprüche, wobei das Gehäuse angepasst ist, um vom System erzeugte EMV-Störungen zu unterdrücken, und/oder
wobei im Wesentlichen alle elektrischen Komponenten des Systems in Faradaykäfigen wie zum Beispiel Stahlbehältern eingeschlossen sind und durch abgeschirmte elektrische Leitungen angeschlossen werden.

12. System nach einem der vorangegangenen Ansprüche, wobei das Gehäuse einen Eingang zur Luftversorgung, zum Beispiel mit Trockenluft, umfasst.

13. System nach einem der vorangegangenen Ansprüche, das weiterhin Mittel zur Erhitzung des Wassers umfasst, bevor es in die Crossflow-Filtrationseinheit gelangt.

14. System nach Anspruch 13, wobei das Wasser mithilfe eines Tauchsieders erhitzt wird, und/oder
wobei das Wasser mithilfe eines Solar-Lufterhitzers erhitzt wird.

15. System nach einem der vorangegangenen Ansprüche, das weiterhin ein oder mehrere Solarzellenpaneele zur Versorgung des Systems mit Strom umfasst.

## Revendications

1. Système mobile de purification d'eau comprenant un carter, une unité de pompage et un système de tuyauterie pour décrire une communication fluidique entre une entrée d'eau, une unité de préfiltration, une unité de filtration transflux conçue pour la filtration transflux, une unité de désinfection et une sortie pour l'apport d'eau purifiée, dans lequel
l'unité de préfiltration comprend un moyen de filtration à sédiments/cartouche et un moyen de déchloration, l'unité de filtration transflux comprenant une pluralité de filtres à membrane parallèles et/ou disposés successivement,
l'unité de filtration transflux étant montée dans un compartiment séparé, séparé de l'unité de pompage, de
l'unité de préfiltration et de l'unité de désinfection,
le système de tuyauterie étant reconfigurable pour que l'unité de filtration transflux présente dans le compartiment séparé puisse être contournée, et
au moins une partie du système reconfigurable de tuyauterie étant doté de tuyaux et/ou de connecteurs non interchangeables, de sorte que le risque de connexions erronées et de tuyaux inadéquats est réduit.

2. Système selon la revendication 1, dans lequel le moyen de déchloration comprend une filtration à charbon actif, et/ou
dans lequel l'unité de filtration transflux comprend des filtres à osmose inverse, des filtres de nanofiltration, des filtres d'ultrafiltration et/ou des filtres de microfiltration, et/ou
dans lequel le moyen de filtration de sédiments comprend au moins un filtre à cartouche, ledit au moins un filtre à cartouche comprenant de préférence une pluralité de cartouches,
et/ou dans lequel l'unité de désinfection comprend un moyen de chloration ou de chloramination.

3. Système selon l'une quelconque des revendications précédentes, dans lequel les moyens de filtration de sédiments comprend des filtres à cartouche de diverses tailles/classes de pores, et/ou dans lequel les moyens de filtration de sédiments comprend au moins un filtre à cartouche dont la classe est entre 100 et 50 µm, par exemple entre 50 et 40 µm, par exemple entre 40 et 30 µm, par exemple entre 30 et 25 µm, par exemple entre 25 et 20 µm, par exemple entre 20 et 15 µm, par exemple entre 15 et 10 µm, par exemple entre 10 et 5 µm, par exemple entre 5 et 1 µm.

4. Système selon l'une quelconque des revendications précédentes, comprenant en outre un moyen de filtration de gros sédiments avant l'unité de préfiltration, le moyen de filtration de gros sédiments comprenant de préférence au moins un filtre de classe comprise entre 1 000 et 500 µm, entre 500 et 300 µm, entre 300 et 200 µm, entre 200 et 100 µm, entre 100 et 50 µm.

5. Système selon l'une quelconque des revendications précédentes, comprenant en outre un filtre flottant à l'entrée, le filtre flottant ayant de préférence une classe comprise entre 1 000 et 500 µm, entre 500 et 300 µm, entre 300 et 200 µm, entre 200 et 100 µm, entre 100 et 50 µm.

6. Système selon l'une quelconque des revendications précédentes, comprenant en outre une unité de distribution d'adjuvants raccordable par le système de tuyauterie pour introduire des adjuvants dans l'eau purifiée.

7. Système selon la revendication 6, dans lequel les adjuvants sont distribués dans l'eau purifiée selon un dosage prédéfini, et/ou dans lequel les adjuvants sont choisis dans l'ensemble des minéraux, des iodures, des chlorures ou des vitamines, et/ou
dans lequel le système de tuyauterie est reconfigurable pour que l'eau puisse être introduite à travers l'unité de distribution d'adjuvants uniquement.

8. Système selon l'une quelconque des revendications précédentes, dans lequel le carter comprend un premier compartiment pour l'unité de pompage, pour l'unité de préfiltration et pour l'unité de désinfection, et un deuxième compartiment pour l'unité de filtration transflux.

9. Système selon l'une quelconque des revendications précédentes, comprenant en outre une unité antigel pour une protection contre le gel du système, ladite unité antigel étant de préférence montée dans le carter.

10. Système selon la revendication 9, dans lequel l'unité antigel comprend une cuve permettant de stocker du liquide antigel tel que du glycol ou de l'éthanol et/ou dans lequel l'unité antigel comprend une pompe permettant d'introduire du fluide antigel dans le système.

11. Système selon l'une quelconque des revendications précédentes, dans lequel le carter est conçu pour supprimer le bruit EMC produit par le système, et/ou dans lequel sensiblement tous les composants électriques du système sont confinés dans des cages de Faraday, tels que des cuves en acier, et raccordés par des fils électriques blindés.

12. Système selon l'une quelconque des revendications précédentes, dans lequel le carter comprend une entrée pour l'introduction d'air, tel que de l'air sec.

13. Système selon l'une quelconque des revendications précédentes, comprenant en outre un moyen de chauffage de l'eau avant introduction dans l'unité de filtration transflux.

14. Système selon la revendication 13, dans lequel l'eau est chauffée au moyen d'un dispositif de chauffage à immersion et/ou
dans lequel l'eau est chauffée au moyen d'un dispositif de chauffage solaire air.

15. Système selon l'une quelconque des revendications précédentes, comprenant en outre au moins un panneau à cellules solaires pour alimenter électriquement le système.
